# EUROPEAN PATENT APPLICATION

(11) **EP 4 815 405 A1**
(43) Date of publication of application: **30.09.2026**
(21) Application number: 25165716.9
(22) Date of filing: 24.03.2025
(51) Int. Cl.: H04L 67/02, H04L 65/611, H04L 65/612, H04N 21/845

(54) **MULTICAST TRANSMITTER LOAD CONTROL**

(71) Applicant: British Telecommunications Public Limited Company, London E1 8EE (GB)
(72) Inventor: NILSSON, Michael Erlin, London E1 8EE (GB); TURNBALL, Rory Stewart, London E1 8EE (GB); STEVENS, Timothy Sean, London E1 8EE (GB); ROPER, Ivan, London E1 8EE (GB); APPLEBY, Stephen Clifford, London E1 8EE (GB)
(74) Representative: British Telecommunications public limited company Intellectual Property Department

(57) **Abstract**

A method of managing content delivery to a client device by way of a proxy and a multicast transmitter in a hybrid unicast/multicast content delivery system. A plurality of proxies are used to handle unicast GET requests for content segments from its associated client device. Those requests can be forwarded over unicast directly to a unicast content server before receiving the response over unicast and forwarding that to the client device over unicast. Alternatively, those GET requests can be forwarded to the multicast transmitter where they can trigger a multicast response for delivering the requested content segment on a multicast channel. The multicast transmitter can be configured to count the number of GET requests received for a segment and compare that to what the multicast transmitter needs, and send an indicator, such as a probability or range of delay values, based on that comparison to the proxies. This indicator is then used by proxies to determine when and how to transmit a GET request for a subsequent segment to the multicast transmitter or to transmit it as a HEAD request to the content server.

## Description

### Field of the Invention

This invention relates to the field of managing content delivery in a network, in particular managing content delivery using a combination of unicast and multicast.

### Background to the Invention

Video content is currently delivered to a range of client devices using unicast delivery, where a single stream of data is transmitted to each individual client device. Web (HTTP) technology is used for the content delivery, where the content is segmented into short segment files, typically around six to ten seconds in duration, enabling each segment file to be requested by and delivered to the client device using HTTP.

Each segment may also be encoded at a set of quality levels, each with a different bit rate and hence different file size. The client device monitors its buffer level and the network throughput achieved, and determines from these at which quality to request the next segment in order to achieve a good compromise between media quality and timely delivery. This is commonly referred to as adaptive bitrate (ABR) streaming.

However, HTTP is delivered over unicast (one to one) transport, so is inefficient for delivering the same content at the same time to many client devices, which is common for live TV broadcast or for a live sports event such as football. Multicast (one to many) transport would be far more efficient. Yet multicast is currently rarely used for any services other than network operators' on-net linear video channels delivered to their own set-top boxes. The main reason for this is that multicast does not lend itself to open use on the Internet.

To bring the benefits of multicast scalability to HTTP-based Internet media streaming, a class of techniques known as Multicast-Adaptive Bitrate (m-ABR) is being investigated and standardised.

Multicast-Adaptive Bitrate (m-ABR) is a relatively new technology. It aims to allow more efficient delivery of ABR content over networks by enabling the use of multicast for content streams where many clients are requesting the same content at about the same time.

One ambition of many m-ABR systems is to deploy multicast and enable m-ABR without any change to the client device and the client application that are already supporting HTTP (unicast) streaming. This can be achieved using a hybrid approach that uses a combination of both multicast and unicast delivery, where a proxy is inserted between the client device and the content server. The proxy can inspect content requests from the client device, and when appropriate, join to a multicast channel, receive multicast content, and provide this content to the client, packaged to look like unicast delivered content.

Examples of such hybrid solutions include: "IP Multicast Adaptive Bit Rate Architecture Technical Report" OC-TR-IP-MULTI-ARCH-C01-161026, 26/10/2016, by Cable Labs; 3GPP specifications, 23.246 (MBMS Architecture and functional description), 26.346 (MBMS Protocols and codecs) and 26.347 (MBMS APIs); and DVB "Adaptive Media Streaming over IP Multicast" ETSI TS 103 769 V1.1.1 (2020-11).

In these hybrid solutions, the proxy typically joins a multicast channel, receives content segments by multicast on the multicast channel, and buffers the received content segments in a cache. The proxy responds to requests for content segments from the client device using cached data whenever possible, and otherwise by requesting and receiving the content segments from a unicast server.

These solutions operate a replica client device at the multicast transmission capability, to obtain and parse the presentation manifest file, and then to request content segments from the content server, just as a client device would, and then transmit that data by multicast. This approach requires knowledge of the streaming format, the presentation manifest format and the content segment indexing scheme, as well as requiring content protection to not prevent the proxy from obtaining and parsing the presentation manifest file. The multicast transmitter will simply transmit the content segments in the order it receives them.

MAUD (multicast-assisted unicast delivery) is the variant of m-ABR that the Applicant has developed, with aspects described in various patent applications including International applications WO2020/173878 and WO2022/037972.

International application WO2020/173878 describes how content is requested by client devices from a content server over unicast. The responses containing the requested content are separated into two components by a first proxy into: a first component containing elements that are specific to individual client devices (for example session specific data), and a second component that is common to all client devices (typically this is the video content being requested). The first component can be delivered over unicast and the second component over multicast to a second proxy. Identifiers are introduced into each of the first and second components to aid recombination of the components to form the original responses. Recombined components are then sent to the client device over unicast by the second proxy.

International application WO2022/037972 describes where content is provided by a content server to a root proxy, and that root proxy delivers the content to a number of edge proxies over multicast where it is cached. When an edge proxy already having the content segment now cached receives a request for that content in the form of an HTTP GET request from a client device, the edge proxy in response sends an HTTP HEAD request for header information associated with that content directly to the content server. The content server responds over unicast with a suitable response to the HTTP HEAD request, which is received by the edge proxy. The edge proxy takes the HEAD response together with the payload from the cached content segment, to generate a client specific content segment for delivery to the client device over unicast.

Generally under MAUD, the root proxy (also referred to as the multicast transmitter) needs to receive a threshold number of GET requests from client devices for a given segment before retrieving and sending that segment (payload at least) over a multicast channel. However, in a live TV sports scenario where a large number of client devices may be requesting the same content segment in a very short period of time, the multicast transmitter will receive a large number of near concurrent GET requests, which could overload it.

### Summary of the Invention

It is the aim of examples of the present invention to provide improved methods of managing the delivery content segments in a hybrid unicast/multicast system.

According to one example of the invention, there is provided a method as set out in claim 1.

The proxy in step vi) may determine not to send the HTTP GET request to the multicast transmitter, and instead the proxy may convert the HTTP GET request to an HTTP HEAD request and send the HTTP HEAD request to the unicast server.

The one or more parameters may indicate a probability that the proxy uses to determine whether to send the HTTP GET request to the multicast transmitter.

When the determined number of HTTP GET requests is higher, the determined value of probability may be lower.

The one or more parameters may indicate a range of delay time values, and the proxy may delay processing the HTTP GET request by a time value from the range of delay time values and send the HTTP GET request to the multicast transmitter if the payload of the requested segment has not been received by multicast by the end of the time value.

The duration of the first time window may be equal to the time between the first request for first segment being received by one of the plurality of proxies and that proxy may determine that the segment will be received by multicast.

The multicast transmitter may determine a time value and transmit it to the plurality of proxies, and one of plurality of proxies that determined not to send the GET request to the multicast transmitter may use the time value to set a timer starting on receipt of the HTTP GET request, wherein if the timer expires then the one of the plurality of proxies may send the HTTP GET request to the multicast transmitter or to the unicast server.

The time value determined by the multicast transmitter may be equal to the duration of the first time window.

### Brief Description of the Drawings

For a better understanding of the present invention reference will now be made by way of example only to the accompanying drawings, in which:
Figure 1 is a system diagram showing the main components of an example of the present invention;
Figure 2 shows a timing diagram of the sequence of operations of an example of an m-ABR system;
Figure 3 shows an exemplary cumulative distribution of requests for a specific content segment
Figure 4 shows a timing diagram of the sequence of operations of an example of the present invention;
Figure 5 shows an exemplary cumulative distribution of requests for a specific content segment showing the reduction of requests sent to the multicast transmitter with the application of an exemplary method;
Figure 6 is a flow chart summarising the steps of an example of the invention;
Figure 7 shows a timing diagram of the sequence of the most significant operations described by flow chart of Figure 6.

### Description of Preferred Embodiments

The present invention is described herein with reference to particular examples. The invention is not, however, limited to such examples.

Examples of the present invention provide a method of managing content delivery to a client device by way of a proxy and a multicast transmitter in a hybrid unicast/multicast content delivery system. A plurality of proxies are used to handle unicast GET requests for content segments from its associated client device. Those requests can be forwarded over unicast directly to a unicast content server before receiving the response over unicast and forwarding that to the client device over unicast. Alternatively, those GET requests can be forwarded to the multicast transmitter where they can trigger a multicast response for delivering the requested content segment on a multicast channel. The multicast transmitter can be configured to count the number of GET requests received for a segment and compare that to what the multicast transmitter needs, and send an indicator, such as a probability or range of delay values, based on that comparison to the proxies. This indicator is then used by proxies to determine when and how to transmit a GET request for a subsequent segment to the multicast transmitter or to transmit it as a HEAD request to the content server. Thus, the load on the multicast transmitter can thus be reduced, but still allow it to receive enough requests to trigger the use of multicast.

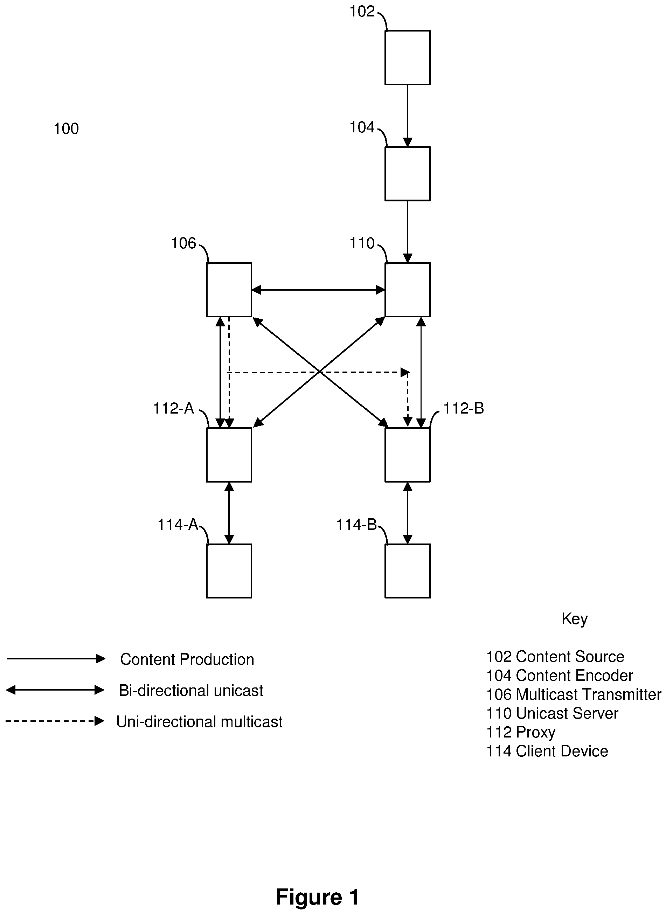

Figure 1 shows a multicast adaptive bit rate (m-ABR) streaming system 100 comprising the main components of an example of the invention. The system 100 is similar to that envisaged by the Applicant's own MAUD (multicast-assisted unicast delivery) systems. The system 100 comprises a content source 102, a content encoder 104, a multicast transmitter 106, a unicast server 110, a plurality of proxies 112-A and 112-B and a plurality of client devices 114-A and 114-B. Each client device 114 is logically associated with one proxy 112, although in practice a single proxy could serve content to more than one client device. The system 100 has been shown with 2 client devices and respective proxies for simplicity. However, in practice there are likely to a large number of client devices and respective proxies.

The content source 102 provides content, such as a live sports or TV broadcast, in the form of video sequences to the content encoder 104.

The content encoder 104 receives the content from the content source 102 and encodes it using a suitable compression scheme, such as ITU-T Recommendation H.264 for video content, and segments the encoded content into a sequence of content segments, each content segment typically of duration 2 to 10 seconds. The content encoder 104 also encodes the content at one or more quality levels or bit rates, resulting in one or more (at each quality level) encoded content segments corresponding to each uncompressed content segment. The content encoder 104 also generates a manifest file that identifies where segments are located by use of a URL in the manifest file. Such an arrangement is typical of an adaptive bit rate streaming service.

The content encoder 104 passes the encoded content segment data, encoded at all of the required bit rates, to the unicast server 110 where the data is stored and made available for delivery by unicast. The unicast server 110 responds to unicast requests for content segments with unicast responses using the stored data. The unicast server 110 may also be referred to as a content server 110.

The proxy 112 may be located within a device such as a home gateway or router. As suggested above, the system 100 may include a plurality of proxies, with each proxy connected and operable as described here with reference to proxy 112.

The client device 114 is assumed to be running a client application, which is the source of content requests. For simplicity, the term client device has been used to refer to a client device running a client application.

The client device 114 can obtain a manifest file from the unicast server 110. Manifest files are used by client devices to identify where content segments are located (by a URL in the manifest). The client device 114 can then request these content segments in sequence using a HTTP GET request for each content segment from the unicast server 110, and concatenate the received content segments to form a continuous stream of content segments for playback. As each content segment is available on the unicast server 110 at a plurality of encoded bit rates, the client device 114 determines for each content segment, which encoded bit rate (quality) to request, taking into account such factors as the available network throughput and how much data is already received and buffered at the client device awaiting play-out.

Some of the requests made by the client device 114 for content segments will not make use of multicast delivery and are sent directly to the unicast server 110, which delivers the requested content by unicast. Other requests for content from the client device 114 that may benefit from multicast delivery are managed by the proxy 112, and can be handled in accordance with the examples described below.

The client device 114 could request and receive content segments from the unicast server 110 from the start to the end of a streaming session. However, in some cases the proxy 112 determines that multicast delivery could be used to receive some content segments.

The proxy 112 monitors unicast content requests from the client device 114 and is aware of when content requested by the client device 114 could be received by multicast.

The proxy 112 determines when it is possible to satisfy the client device's requests for content segments using data that could be delivered by multicast, joins the relevant multicast channel at an appropriate time, and receives content segment payload data by multicast and stores the received content segment payloads in a cache.

The client device 114 does not need to be aware of the proxy 112 and does not need to be aware of whether content is being delivered by unicast from the unicast content source via the proxy 112, or is delivered by multicast to the proxy 112 which then delivers the content to the client device 114 in a unicast format.

The proxy 112, on receiving a request (an HTTP GET request) for a content segment from the client device 114, checks the contents of its cache for the payload of the requested content segment. If the payload of the requested content segment is stored in the cache, either in its entirety or in part as it is still being received by multicast, the proxy 112 changes the HTTP GET request from the client device 114 to an HTTP HEAD request and sends it to the unicast server 110. When the proxy 112 receives the response from the unicast server 110, it combines the HTTP HEAD response with the payload delivered by multicast and stored in the cache to create a full response which it sends to the client device 114, packaged as a unicast content response.

Otherwise, that is, if the payload of the requested content segment is not stored in its cache, either in its entirety or in part, then the proxy 112 sends the HTTP GET request from the client device 114 to the multicast transmitter 106.

When the multicast transmitter 106 receives a GET request from the proxy 112, and the payload of the requested segment has not already been transmitted by multicast, the multicast transmitter 106 either instructs the proxy 112 to get the content segment from the unicast server 110, or forwards the request to the unicast server 110. The multicast transmitter 106 then receives the response from the unicast server 110, and splits the response into a header and a payload, delivering the header to the proxy 112 by unicast and transmitting the payload by multicast, where the payload includes an identifier to associate the payload with the requested URL.

There are various ways in which the multicast transmitter 106 could make this decision as to whether to instruct the proxy 112 to get the content segment from the unicast server 110 or to forward the request to the unicast server 110. In a simple case the multicast transmitter 106 never instructs the proxy 112 to get the content segment from the unicast server 110 and always forwards the first request for a specific content segment to the unicast server 110.

When the multicast transmitter 106 receives a GET request from a proxy 112 after the payload of the requested segment has been transmitted by multicast, the multicast transmitter 106 changes the GET request to a HEAD request, forwards it to the unicast server 110, and returns the response to the proxy 112 by unicast. This happens when the requested segment is not in the cache at the proxy 112 when the GET request from the client device 114 is received at the proxy 112. The reasons for this include the following.

In a first case, the proxy 112 received the request from the client device 114 before it had received any or sufficient data for the segment to be able to associate it with the request.

In a second case, the proxy 112 may have recently joined the multicast channel, joining after the payload of the requested segment had been transmitted on the multicast channel.

In a third case, the client device 114 may have requested the segment sufficiently behind the live edge that the payload of the requested content segment, although having been received by multicast and stored in the cache, is no longer stored in the cache at the proxy 112.

The first case may occur most frequently, especially when many client devices request a content segment very soon after it first becomes available. Many such requests could be made in the time it takes for the multicast transmitter 106 to receive a request from a proxy 112, to obtain the content segment from the unicast server 110, to format it for multicast delivery and for it to be delivered over the multicast channel.

Furthermore, in this first case, by the time that the proxy 112 has received by unicast the response from the multicast transmitter 106 containing just a header, it is likely that enough of the payload of the requested segment has been received by multicast for the proxy 112 to identify it as corresponding to the header, and to form a complete response which is then returned to the client device 114.

Otherwise, including in the second and third cases, the proxy 112 does not have any or enough of the payload of the requested content segment to combine with the header received by unicast from the multicast transmitter 106, and so sends the original GET request to the unicast server 110, receives a complete response and forwards it to the client device 114.

In the m-ABR systems as described above, the multicast transmitter 106 may receive a very large number GET requests for the same content segment within a very short period of time. The multicast transmitter 106 may not be designed to handle such a large number of requests in such a short period of time. Indeed, there is no need for the multicast transmitter 106 to receive such a large number of requests to trigger using multicast for delivering the payload of a given content segment - it only needs to receive enough requests to determine which content segment to request next from the unicast server 110 and transmit (the payload of) on the multicast channel.

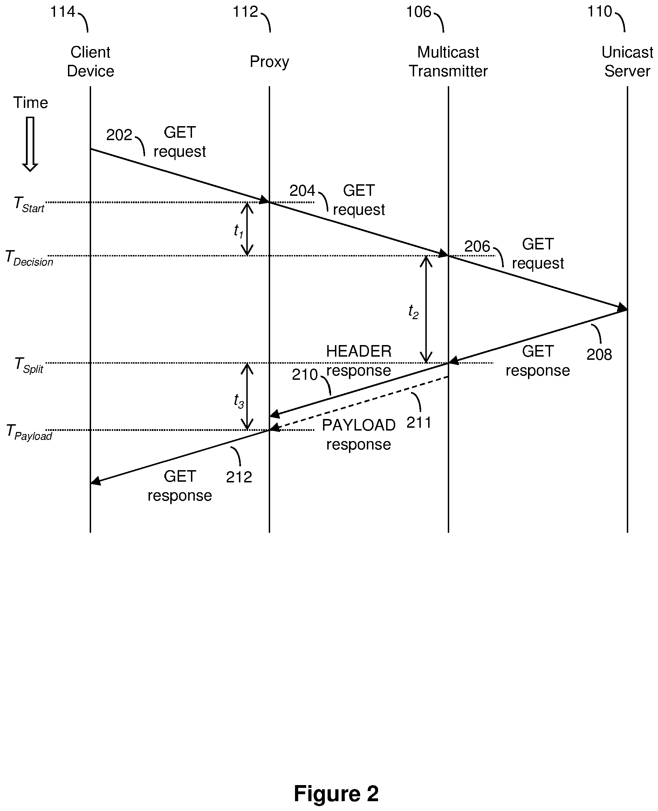

Figure 2 shows a timing diagram of the sequence of operations described above. The proxy 112 receives a GET request 202 from the client device 114 at time *T_{Start}* for a specific content segment. At this stage, the proxy 112 has already joined the multicast channel. The proxy 112, having not found the payload of the requested content segment in its cache, forwards the GET request 204 to the multicast transmitter 106. At time *T_{Decision} = T_{Start} + t₁,* the multicast transmitter 106 has received and processed the GET request sent from the proxy 112, determining that the requested content segment should be the next to be transmitted by multicast and hence forwarding the GET request 206 to the unicast server 110. The unicast server 110 replies 208 to the multicast transmitter 106 with the requested content segment. At time *T_{Split} = T_{Decision} + t₂* (where *t₂* is the time taken to forward the GET request and receive a response from the unicast server), the multicast transmitter 106 separates the header from the payload and forwards the header to the proxy 112 by unicast 210 and transmits the payload by multicast 211 on the multicast channel to all proxies 112 that have joined that multicast channel. The payload of the requested content segment starts to arrive at all proxies 112 joined to the multicast channel at time *T_{Payload}= T_{Split} + t₃.* In this example, any proxies 112 that receive a header response over unicast and a payload response over multicast combines the header and payload and forms a complete response 212 which is then returned to the client device 114 over unicast.

All proxies 112 that are joined to the multicast channel and receive a request for the same specific content segment from their associated client device 114 during the time period from *T_{Start}* to *T_{Payload}* will forward the GET request to the multicast transmitter 106.

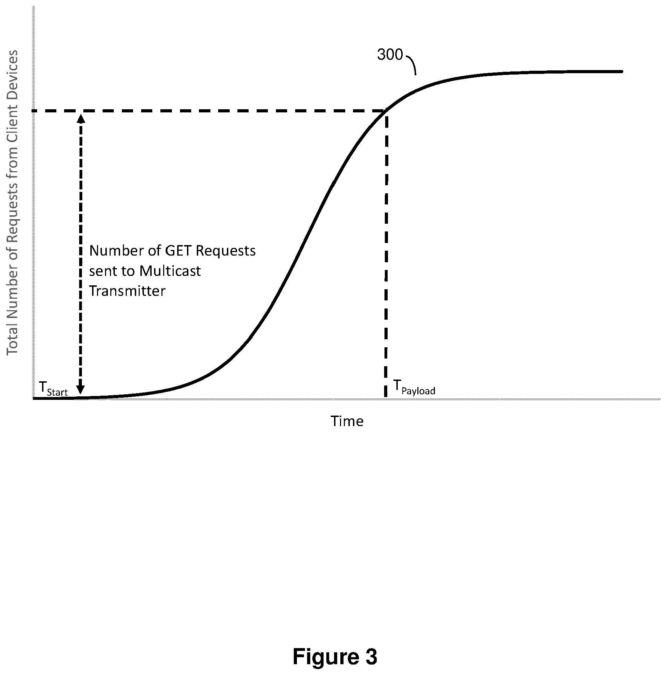

Figure 3 shows an exemplary cumulative distribution 300 of requests for a specific content segment from the plurality of client devices 114 that are associated with proxies 112 that have joined the multicast channel. It shows the number of requests for the specific content segment that are received by these proxies 112 from their associated client devices 114 during the time period from *T_{Start}* to *T_{Payload},* all of which will be forwarded to the multicast transmitter 106.

Described now is one example method by which a smaller number of requests for content segments are sent to the multicast transmitter 106.

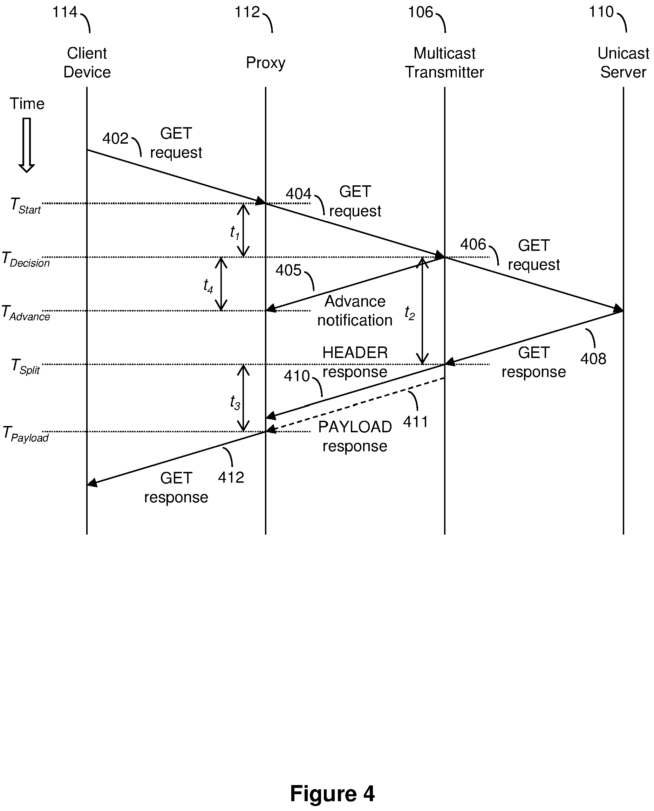

Figure 4 shows a timing diagram similar to that of Figure 2, but at time *T_{Decision} = T_{Start} + t₁,* the multicast transmitter 106, in addition to forwarding the GET request 404 to the unicast server 110 as described above, also sends advance notification 405 on the multicast channel that the requested content segment will soon be transmitted on the multicast channel. This advance notification is received by all proxies 112 joined to the multicast channel at time *T_{Advance} = T_{Decision} + t₄.*

All proxies 112 that are joined to the multicast channel and receive a GET request for the specific content segment from their associated client device 114 during the time period from *T_{Advance}* to *T_{Payload}* will have received the advance notification on the multicast channel that the requested content segment will soon be transmitted on the multicast channel. These proxies 112 do not need to forward the received GET requests to the multicast transmitter 106. Instead these proxies 112 change the GET requests to HEAD requests and send them to the unicast server 110 and wait for the payload of the requested content segment to be received on the multicast channel.

In this way, only proxies 112 that receive a GET request for the specific content segment from their associated client device 114 during the time period from *T_{Start}* to *T_{Advance}* need to forward their GET request to the multicast transmitter 106.

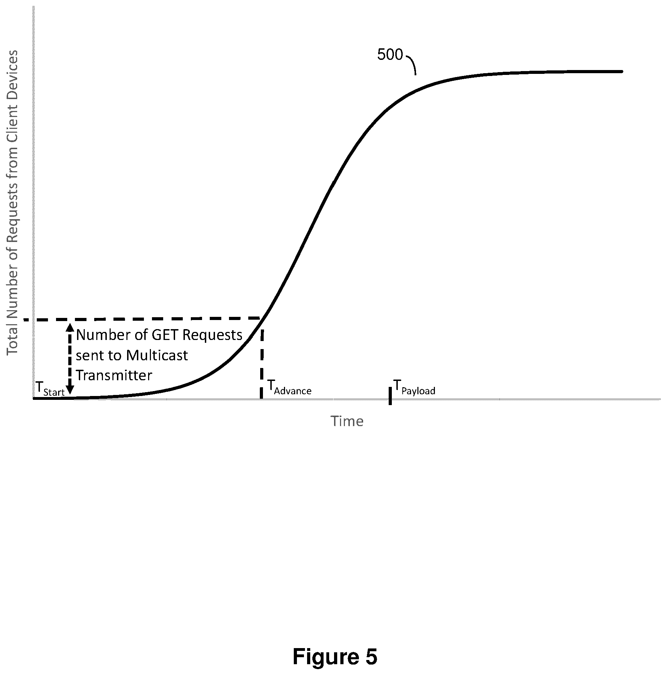

Figure 5 shows the same cumulative distribution 500 as in Figure 3. However, the total number of GET requests that are sent to the multicast transmitter 106 using the advance notification method described is the number between from *T_{Start}* to *T_{Advance},* which is much lower than the number from *T_{Start}* to *T_{Payload}* highlighted in Figure 3.

Alternatively, instead of sending the advance notification by multicast, the multicast transmitter 106 could send the advance notification by unicast to all the proxies 112 that are joined to the multicast channel.

Additionally, the multicast transmitter 106 can determine an estimate of the time expected to be taken, *t₂,* to receive the response from the unicast server 110 for the GET request for the specific content segment. The multicast transmitter 106 can send this estimate to all proxies 112 that are joined to the multicast channel, either by using the multicast channel or by using unicast. The multicast transmitter 106 may include the time estimate as part of the advance notification.

The multicast transmitter 106 may determine this estimate of *t₂* using measurements of the time taken to receive the response from the unicast server 110 for one or more preceding GET requests to the unicast server for content segments. The multicast transmitter 106 may, for example, calculate the estimate as the mean or median value of the measurements, or a specific percentile of the measurements, including the highest of the measurements.

The proxy 112, having received a GET request from its associated client device 114 during the time period from *T_{Advance}* to *T_{Payload},* as well as changing the GET request to a HEAD request and sending it to the unicast server 110, sets a timer to expire after the period of time indicated by the multicast transmitter 106 as its estimate of the time period *t₂*. The proxy 112 should receive, or start to receive, the payload of the requested content segment before this timer expires. But in the case of an error, such as the unicast server 110 not returning the requested content segment to the multicast transmitter 106, or a transmission error on the multicast channel causing the payload not to be received, the timer will expire and the proxy 112 can then forward the original GET request for the content segment to either the multicast transmitter 106 or the unicast server 110.

Described now is another example method by which a smaller number of requests for content segments are sent to the multicast transmitter 106.

The multicast transmitter 106 may only need a relatively small number of requests for a specific content segment to determine that the specific content segment should be the next to be transmitted on the multicast channel. If the multicast transmitter 106 receives many more requests than this, there is an unnecessarily high load placed on the multicast transmitter 106. However, if the multicast transmitter 106 receives significantly less than this number of requests, it may not be able to make a confident decision of whether the specific content segment should be the next to be transmitted on the multicast channel.

The multicast transmitter 106 may count the number of requests it receives for one or more specific content segments within one or more specific time periods. For example, for each of one or more specific content segments, it may count the number of requests for the specific content segment within a time period starting with the first such request at time *T_{Start}.* The time period may end a predetermined time after it starts, for example 10 milliseconds or 50 milliseconds after it starts. Alternatively, the time period may end at time *T_{end},* where *T_{end}* is equal to time *T_{Advance}* if advance notifications are used and equal to time *T_{Payload}* otherwise. That is, the time period ends at time *T_{end},* which is the time when notification is received by all proxies 112 that are joined to the multicast channel that the payload of the specific content segment will be, or is being, received on the multicast channel.

The multicast transmitter 106 can estimate this time period from time *T_{Start}* to time *T_{End}* as the time period during which it receives many requests for the specific content segment, as time *T_{Start}* is the time of the first request for the specific content segment and time *T_{End}* is the time after which all proxies 112 should change a received GET request for the specific content segment to a HEAD request and send it to the unicast server 110. The only GET requests for the specific content segment that the multicast transmitter 106 receives after time *T_{End}* should be from proxies 112 that have not seen the advance notification or the start of delivery of the payload of the specific content segment, either due to transmission issues or due to only recently joining the multicast channel.

The multicast transmitter 106 compares this count of the number of requests for the specific content segment with the number of requests it would like to receive, and sends an appropriate message including one or more parameters to all proxies 112 that are joined to the multicast channel, either by using the multicast channel or by using unicast. This message is used by the plurality of proxies 112, when receiving a request for a subsequent content segment (i.e. a segment after the segment being counted) from their associated client device 114, to determine whether to send the GET request to the multicast transmitter 106 or change it to a HEAD request and send it to the unicast server 110, where this determination may be made immediately or may be made after a delay.

If the multicast transmitter 106 has received many more requests for the specific content segment than it would like to receive, the message sent by the multicast transmitter 106 should cause the number of GET requests it receives for subsequent content segments to be lower. If the multicast transmitter 106 has received significantly fewer requests for the specific content segment than it would like to receive, the message sent by the multicast transmitter 106 should cause the number of GET requests it receives for subsequent content segments to be higher (and thus closer to the actual number of GET requests received by the proxies 112).

For example, the message sent by the multicast transmitter 106 could indicate a probability that the proxy 112 should apply when determining whether to forward the GET request to the multicast transmitter 106.

As an example, consider the case of the audience (and thus the number of client devices) for some content increases with time, where the content is for example a sporting event. Initially the audience number may be low, and only 500 proxies 112 are joined to the multicast channel. If the multicast transmitter 106 needs 50 GET requests spread over the time period from time *T_{Start}* to time *T_{End},* the multicast transmitter 106 could send a message indicating a probability of forwarding the GET request of 0.100. But if later the audience has grown and 1000 proxies 112 are joined to the multicast channel, the number of GET requests received would be 100 if the multicast transmitter 106 has not transmitted a message with an updated probability. Regardless, it could now transmit a message indicating a probability of forwarding a GET request of 0.050. Later as the audience builds up further, it could transmit yet lower probabilities, and later still, perhaps after the event has finished, and the audience is reducing, it could transmit higher probabilities.

In another example, the message sent by the multicast transmitter 106 could indicate a distribution of delay values that the proxy 112 should apply before determining how to handle a GET request for the specific content segment. The multicast transmitter 106 could, for example, indicate a uniform distribution of delay from 10 milliseconds to 50 milliseconds, and the proxy 112 would randomly choose a value of delay in that range, and then wait for that time before determining how to handle the GET request. In that time period the proxy 112 may have received advance notification (at time *T_{Advance}*) that the payload of the requested content segment will be transmitted on the multicast channel, or may have started to receive the payload at time *T_{Payload}.* In these cases the proxy 112 changes the GET request to a HEAD request and sends it to the unicast server 110, and otherwise sends the GET request to the multicast transmitter 106. The overall result is similar to the case above when using a probability value, with the number of GET requests received by the multicast transmitter 106 being controlled by the message that it transmits to the proxies 112.

In another example, the multicast transmitter 106 estimates the time between time *T_{Start}* and time *T_{End}* as described above, and estimates the segment period of the content, that is, the typical time between the first request for one content segment and the first request for the next content segment, that is, the time between *T_{Start}* for one content segment and *T_{Start}* for the next content segment. The multicast transmitter 106 includes this information in the message that it transmits. The proxy 112, knowing the time *T_{End}* for the previous content segment can estimate the corresponding time for the next content segment by adding the content segment period as estimated by the multicast transmitter 106. When the proxy 112 receives a GET request from its associated client device 114 for the next content segment, it can determine how early this request is, that is how soon it is after the first request at time *T_{Start},* or alternatively, how late this request is, that is, how long it is until time *T_{End}*.

The proxy 112 can then take this time into account when determining whether to send the GET request to the multicast transmitter 106 or change it to a HEAD request and send it to the unicast server 110, with it being more likely if the request is early and less likely if it is late. Similarly, in the case of adding delay, it could choose a smaller value from the range of delay if the request is early and a higher value if it is late. The reason for doing this is that the multicast transmitter 106 may need a certain number of requests to make its decision of whether to transmit the payload of the requested content segment by multicast, and the sooner it gets that number, the sooner it can make its decision, and the sooner it can transmit the payload on the multicast channel, hence potentially it can reduce the end to end latency of the system.

The multicast transmitter 106 could support the above modes of operation by instead of indicating a single value of probability or a range of delay values from which to select one with uniform distribution, the multicast transmitter 106 could instead indicate a probability distribution or delay distribution, expressed as a function of how early a request is received, that is, how long after the time *T_{Start},* or how long before time *T_{End}* the request is received is received.

In another example, the proxy 112, as described above, knowing the time *T_{Advance}* for the previous content segment estimates the corresponding time for the next content segment by adding the content segment period as estimated by the multicast transmitter 106. The proxy 112, in the case of sending a HEAD request to the unicast server 110, starts a timer that expires at time *T_{Advance},* or by adding a safety margin, expires a little later. In the case of the timer expiring before the payload of the next content segment starts to be delivered on the multicast channel, the proxy 112 forwards the original GET request for the content segment to either the multicast transmitter 106 or the unicast server 110.

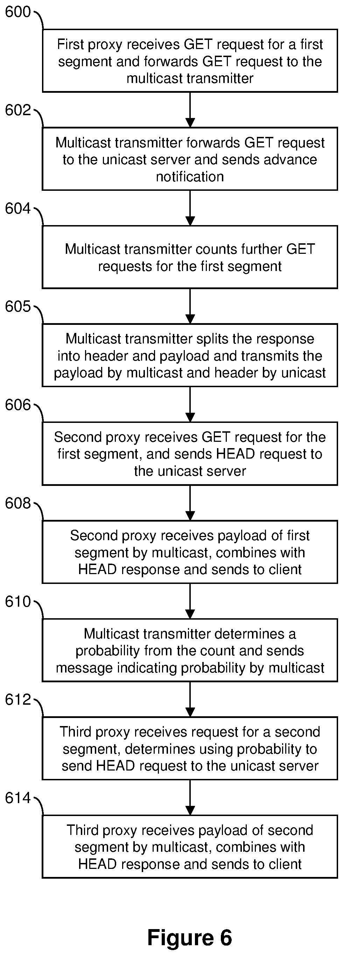

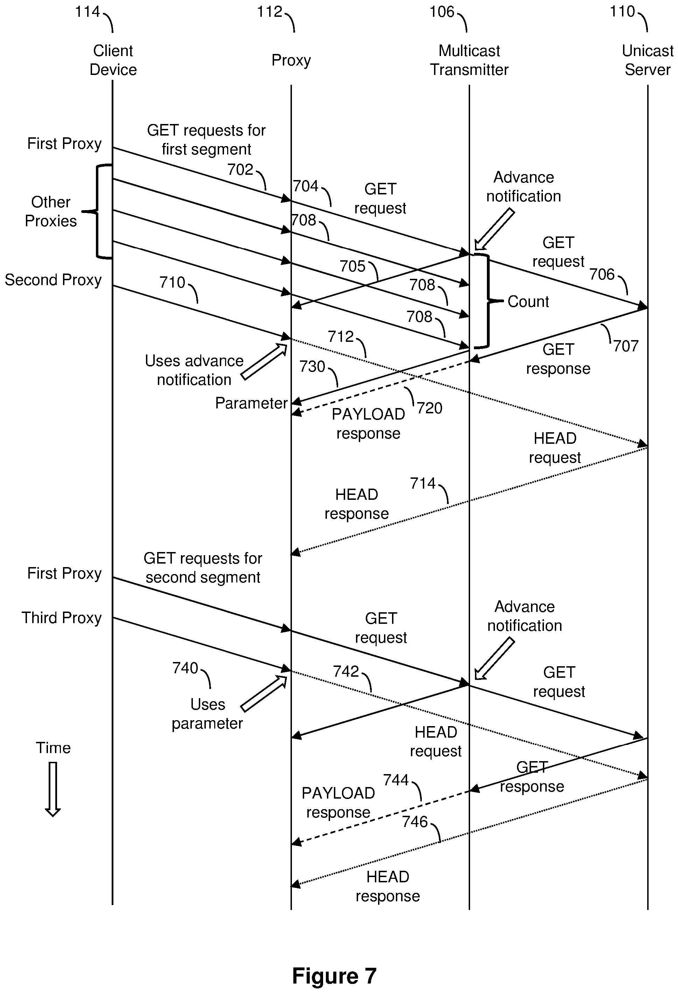

Turning now to the flow chart of Figure 6, which illustrates the steps of a worked example. Figure 7 shows a timing diagram of the sequence of the most significant operations described by the flow chart of Figure 6. Both Figure 6 and 7 will now be referenced in the example below of where the message sent by the multicast transmitter indicates a probability that the proxy should apply when determining whether to forward the GET request to the multicast transmitter.

In step 600, a first proxy 112 receives a GET request 702 for a first content segment from its associated client device 114 and forwards the GET request 704 to the multicast transmitter 106.

In step 602, the multicast transmitter 106 forwards the GET request 706 for the first content segment to the unicast server 110 and sends an advance notification 705 on the multicast channel, to all of the proxies 112 that are joined to the multicast channel, indicating that the payload of the first content segment will be transmitted on the multicast channel. Note that this GET request for the first content segment is not the first GET request for the first content segment that the multicast transmitter 106 has received from a proxy 112, but the GET request that triggered the decision to transmit the payload of the first content segment on the multicast channel.

In step 604, the multicast transmitter 106 receives further GET requests 708 for the first content segment from other proxies 112 and counts them.

In step 605, the multicast transmitter 106 receives the GET response 707 from the unicast server 110 and splits the response into a header and a payload, delivering the header to the proxy 112 by unicast and transmitting the payload 720 by multicast on the multicast channel, where the payload includes an identifier to associate the payload with the requested URL.

In step 606, a second proxy 112, after having received the advance notification on the multicast channel, receives a GET request 710 for the first content segment from its associated client device 114. The second proxy 112 knows, having received the advance notification, that the payload of the requested content segment will be transmitted on the multicast channel, and so changes the GET request to a HEAD request and sends the HEAD request 712 to the unicast server 110 which replies with a HEAD response 714.

In step 608, the second proxy and all other proxies joined to the multicast channel receive the payload 720 of the content segment on the multicast channel and store it in their respective caches. The second proxy combines the HEAD response from the unicast server 110 with the payload received by multicast to create a full response which it sends to its associated client device 114 by unicast.

In step 610, the multicast transmitter 106 determines a probability from the count of the number of GET requests for the first content segment and sends a message 730 indicating the probability on the multicast channel to all of the proxies 112 that are joined to the multicast channel.

For example, if the multicast transmitter 106 had previously determined and transmitted a probability of 0.100, and has counted 200 GET requests for the first content segment but only needs 50 GET requests, then it should determine a new value of probability by scaling the previously determined and transmitted value by 50/200 to reduce the number of GET requests it would receive for a subsequent segment. In this case it would determine a new value of probability of 0.025, and then transmit that probability on the multicast channel to all of the proxies 112 that are joined to the multicast channel.

In step 612, a third proxy, after having received the probability on the multicast channel, receives a request for a second content segment from its associated client device 114. The third proxy generates a random number and compares 740 the random number with the probability received from the multicast transmitter 106, and on finding it is lower, changes the GET request to a HEAD request and sends the HEAD request 742 to the unicast server 110 which replies with a HEAD response 746. Alternatively, the third proxy determines with the probability received from the multicast transmitter 106 to send the GET request for the second content segment to the multicast transmitter 106 and otherwise changes the GET request to a HEAD request and sends the HEAD request 742 to the unicast server 110.

For example, the third proxy generates a random number from a uniform distribution from 0.000 to 1.000, gets the result 0.420, compares this to the received value of 0.025, and on finding its value to be higher, changes the GET request to a HEAD request and sends the HEAD request 742 to the unicast server 110.

In step 614, the third proxy and all other proxies joined to the multicast channel receive the payload 744 of the second content segment on the multicast channel and store it in their cache. The third proxy combines the HEAD response from the unicast server 110 with the payload received by multicast to create a full response which it sends to its associated client device 114 by unicast.

In general, it is noted herein that while the above describes examples of the invention, there are several variations and modifications which may be made to the described examples without departing from the scope of the present invention as defined in the appended claims. One skilled in the art will recognise modifications to the described examples.

## Claims

1. A method of delivering content to a client device in a network comprising a plurality of client devices, wherein said content comprises a sequence of segments, said method comprising:
i) receiving (600) at one or more of a plurality of proxies an HTTP GET request for a first segment from one or more of the plurality of client devices, and sending the one or more HTTP GET requests to a multicast transmitter;
ii) sending (602) by the multicast transmitter one of the HTTP GET requests (706) to a unicast server and receiving the response (707);
iii) splitting (605) by the multicast transmitter the HTTP GET response (707) into a header and a payload, sending the header by unicast to the proxy that sent the HTTP GET request that is sent in step ii) and sending the payload (720) by multicast;
iv) determining (610) by the multicast transmitter one or more parameters (730) in dependence on the one or more HTTP GET requests for the first segment received at the multicast transmitter in a first time window;
v) sending (610) by the multicast transmitter the one or more parameters (730) to the plurality of proxies;
vi) receiving (612) at one of the plurality of proxies an HTTP GET request for a second segment from a client device, and determining, in dependence on the one or more parameters, whether to send the HTTP GET request to the multicast transmitter and if it is determined that the HTTP GET request should be sent, then sending the HTTP GET request to the multicast transmitter.

2. The method according to claim 1, wherein when the proxy in step vi) determines not to send the HTTP GET request to the multicast transmitter, and instead the proxy converts the HTTP GET request to an HTTP HEAD request and sends the HTTP HEAD request to the unicast server.

3. The method according to claim 1 or 2, wherein the one or more parameters indicate a probability that the proxy uses to determine whether to send the HTTP GET request to the multicast transmitter.

4. The method according to claim 3, wherein when the determined number of HTTP GET requests is higher, the determined value of probability is lower.

5. The method according to claim 1 or 2, wherein the one or more parameters indicate a range of delay time values, and the proxy delays processing the HTTP GET request by a time value from the range of delay time values and sends the HTTP GET request to the multicast transmitter if the payload of the requested segment has not been received by multicast by the end of the time value.

6. The method according to claim 5, wherein the duration of the first time window is equal to the time between the first request for first segment being received by one of the plurality of proxies and that proxy determining that the segment will be received by multicast.

7. The method according to any preceding claim, wherein the multicast transmitter determines a time value and transmits it to the plurality of proxies, and one of plurality of proxies that determined not to send the GET request to the multicast transmitter uses the time value to set a timer starting on receipt of the HTTP GET request, wherein if the timer expires then the one of the plurality of proxies sends the HTTP GET request to the multicast transmitter or to the unicast server.

8. The method according to claim 7, wherein the time value determined by the multicast transmitter is equal to the duration of the first time window.
